# EUROPEAN PATENT APPLICATION

(11) **EP 2 289 971 A1**
(43) Date of publication of application: **02.03.2011**
(21) Application number: 09290655.1
(22) Date of filing: 27.08.2009
(51) Int. Cl.: C08G 64/02, C08G 64/30

(54) **Ring opening polymerisation of cyclic carbonates with organic catalyst systems**

(71) Applicant: Total Petrochemicals Research Feluy, 7181 Seneffe (Feluy) (BE); CENTRE NATIONAL DE LA RECHERCHE SCIENTIFIQUE (CNRS) Etablissement Public, 75016 Paris (FR)
(72) Inventor: Helou, Marion, 35000 Rennes (FR); Guillaume, Sophie, 35500 Vitré (FR); Carpentier, Jean-François, 35690 Acigne (FR); Brusson, Jean-Michel, 1410 Waterloo (BE)
(74) Representative: Roufosse, Micheline C.

(57) **Abstract**

The present invention discloses a method for polymerising cyclic carbonates by immortal ring-opening polymerisation in the presence of organocatalysts and alcohol, said alcohol acting as initiator and as transfer agent.

## Description

### Field of the invention.

The present invention relates to the field of controlled immortal ring-opening polymerisation of cyclic carbonates with metal-free catalyst systems.

### Description of the related art.

Aliphatic polycarbonates are highly valuable biopolymers. Because of their outstanding properties, they find applications in a wide array of fields ranging from biomedical, textile, microelectronics or packaging as described for example in Dove (A. P. Dove Chem. Commun. 2008, 6446-6470) or in Albertsson and Varma (A.-C. Albertsson, I. K. Varma Biomacromolecules 2003, 4, 1466-1486) or in Nair and Laurencin (L. S. Nair, C. T. Laurencin Prog. Polym. Sci. 2007, 32, 762-798) or in Artham and Doble (T. Artham, M. Doble Macromol. Biosci. 2008, 8, 14-24).

Polycarbonates, being derived from renewable resources, have recently appeared as precious alternatives to petrochemical thermoplastics thereby becoming an environmentally and economically attractive hot research topic. In order to become a valid alternative to petrochemical thermoplastics, however, the polymerisation procedure of polycarbonates should enable control of the molar mass, provide a narrow molar mass distribution as well as a high selectivity, activity and productivity, a variable yet reliable topology of the macromolecule, fidelity of end-groups and functionality, and sequence of monomeric units along the main polymer chain.

Among living polymerisation techniques used to prepare polycarbonates, ring-opening polymerisation (ROP) stands out as the leading approach to satisfy such challenges as described for example in Rokicki (G. Rokicki Prog. Polym. Sci. 2000, 25, 259-342) or in Matsumura (S. Matsumura Adv. Polym. Sci. 2005, 194, 95-132) or in Odian (G. Odian in Principles of Polymerization, Fourth edition, Wiley Interscience, 2004) or in Penczek et al. (S. Penczek, M. Cypryk, A. Duda, P. Kubisa, S. Slomkowski Prog. Polym. Sci., 2007, 32, 247-282) or in Jerome and Lecomte (C. Jerome, Ph. Lecomte Adv. Drug. Delivery Rev. 2008, 60, 1056-1076) or in Coulembier et al. (O. Coulembier, P. Degee, J. L. Hedrick, P. Dubois Prog. Polym. Sci. 2006, 31, 723-747).

While the state of the art in organometallic catalytic polymerisation provides various proficient systems based on non toxic metal centres such as zinc, magnesium, calcium or rare-earth metals, bearing suitable ancillary ligand(s), great concern is currently aimed at the development of metal-less catalytic systems to avoid the toxicity issue of eventual residual metallic traces in the final polymer.

To face this concern, one first approach recently established is the "immortal" ROP of carbonates, which allows the use of a metallic complex associated to a protic source such as an alcohol, used in large excess and which behaves both as a co-initiator and as a chain transfer agent, as described for example in Inoue (S. Inoue J. Polym. Sci. 2000, 38, 2861-2871) or in Aida and Inoue (T. Aida, S. Inoue Acc. Chem. Res. 1996, 29, 39-48) or in Sugimoto and Inoue (H. Sugimoto, S. Inoue Adv. Polym. Sci. 1999, 146, 39-119) or in Helou et al. (M. Helou, O. Miserque, J.-M. Brusson, J.-F. Carpentier, S. M. Guillaume Chem. Eur. J. 2008, 14, 8772-8775) or in Helou et al. (M. Helou, O. Miserque, J.-M. Brusson, J.-F. Carpentier, S. M. Guillaume Adv. Synth. Catal. 2009, 351, 1312-1324) or in Helou et al. (M. Helou, O. Miserque, J.-M. Brusson, J.-F. Carpentier, S. M. Guillaume Macromol. Rapid Commun. 2009, *in press*) or in European Patent application 08290187.7.

By allowing the growth of as many polymer chains as the number of equivalents of alcohol introduced per unique metal centre, one can lower the quantity of metallic pre-catalyst used to amounts as low as 10 ppm while maintaining very high activities and productivities. The initiating species thus becomes catalytic with respect to both the monomer and to the polymer. Besides, thanks to the ancillary ligand present in the metal coordination sphere, the control and selectivity can be easily achieved as disclosed for example in Cheng et al. (M. Cheng, A. B. Attygalle, E. Lobkovsky, G. W. Coates, J. Am. Chem. Soc. 1999, 121, 11583-11584) or in Chamberlain et al. (B. M. Chamberlain, M. Cheng, D. R. Moore, T. M. Ovitt, E. Lobkovsky, G. W. Coates, J. Am. Chem. Soc. 2001, 123, 3229-3238) or in Rieth et al. (L. R. Rieth, D. R. Moore, E. Lobkovsky, G. W. Coates, J. Am. Chem. Soc. 2002, 124, 15239-15248) or in Amgoume et al. (A. Amgoune, C. M. Thomas, S. Ilinca, T. Roisnel, J.-F. Carpentier Angew. Chem., 2006, 45, 2782-784).

Such a living ROP including reversible transfer reactions offers the great advantage of combining high efficiency, controlled macromolecular features and resulting non toxic biopolymers as disclosed for example in Penczek and Biela (S. Penczek, T. Biela, A. Duda Macromol. Rapid Commun., 2000, 21, 941-950) or in Penczek et al. (S. Penczek, M. Cypryk, A. Duda, P. Kubisa, S. Slomkowski Prog. Polym. Sci., 2007, 32, 247-282).

In another recent approach, metal-free catalytic systems have been developed such as organocatalytic initiating derivatives selected from pyridines, phosphines, N-heterocyclic carbenes, thio-ureas, guanidines, phosphazenes as well as enzymes as described for example in Dechy-Cabaret et al. (O. Dechy-Cabaret, B. Martin-Vaca, D. Bourissou Chem. Rev. 2004, 104, 6147-6176) or in Bourissou et al. (D. Bourissou, S. Moebs-Sanchez, B. Martin-Vaca C. R. Chimie, 2007, 10, 775-794) or in Kamber et al. (N. E. Kamber, W. Jeong, R. M. Waymouth, R. C. Pratt, B. G. G. Lohmeijer, J. L. Hedrick Chem. Rev. 2007, 107, 5813-5840) or in Endo and Sanda (T. Endo, F. Sanda Macromol. Symp. 2000, 159, 1-7) or in Endo et al. (T. Endo, Y. Shibasaki, F. Sanda J. Polym. Sci. 2002, 40, 2190-2198) or in Kobayashi (Kobayashi, S. Macromol. Rapid Commun. 2009, 30, 237-266) or in Ran et al (N. Ran, L. Zhao, Z. Chen, J. Tao, Green Chem. 2008, 10, 361-372). The activity and selectivity of these organocatalysts compete with some of the most active metal based catalysts for the ROP of lactones, cyclic carbonates and siloxanes. Such polymerisations promoted by simple organic molecules thus appear as a possible alternative to those implying organometallic reagents.

A number of organocatalysts have been used successfully in the controlled ROP of trimethylene carbon ate (TMC). The resulting PTMCs have molar mass of up to 72,000 g/.mol and narrow molar mass distribution of the order of 1.04 to 1.83 showing end-group fidelity as described for example in Nederberg et al. (F. Nederberg, B. G. G. Lohmeijer, F. Leibfarth, R. C. Pratt, J. Choi, A. P. Dove, R. M. Waymouth, J. L. Hedrick Biomacromolecules, 2007, 8, 153-160) or in Mindemark et al. (Mindemark, J. Hilborn, T. Bowden Macromolecules, 2007, 40, 3515-3517) or in Watanage et al (J. Watanabe, S. Amenori, M. Akashi Polymer, 2008, 49, 3709-3715). The molar mass distribution is defined by the ratio Mw/Mn of the weight average molecular weight Mw to the number average molecular weight Mn.

These organocatalysts include commercially available guanidines, e.g., 1.5.7-triazabicyclo-[4.4.0]dec-5-ene (TBD) and 7-methyl-1.5.7-triazabicyclo-[4.4.0]dec-5-ene (MTBD), along with a structurally similar amidine base 1,8-diazabicyclo[5.4.0]undec-7-ene (DBU), tertiary amines 2-(dimethylamino)ethanol (DMAE) or 2-(dimethylamino)ethyl benzoate (DMAEB), selected NHCs with either alkyl or aryl substituents, such as 1,3-diisopropyl-4,5-dimethyl-imidazol-2-ylidene and 1,3-bis(2,6-diisopropylphenyl)-imidazol-2-ylidene, and some bifunctional thiourea-tertiary amine catalyst. These organocatalysts were used in presence of up to 10 equivalents of alcohol (e.g., HOCH₂Ph, HO(CH₂)₄OH), in solution at room temperature or in bulk at temperatures ranging from 48 to 65 °C. Some of these organocatalysts were also investigated in the ROP of variously substituted TMCs: they include the aforementioned TBD, DBU, dimethylaminopyridine (DMAP), and other amines (e.g., aniline, *N*,*N*-dimethylaniline, triethylamine, pyridine, quinuclidine, 1,4-diazabicyclo[2.2.2]octane) or amino-acids, and they were used possibly in presence of tin(octoate)₂. These studies are reported for example in Pratt et al. (C. Pratt, F. Nederberg, R. M. Waymouth, J. L. Hedrick Chem. Commun. 2008, 1114-116) or in Nederberg et al. (F. Nederberg, V. Trang, R. C. Pratt, A. F. Mason, C. W. Frank, R. M. Waymouth, J. L. Hedrick Biomacromolecules, 2007, 8, 3294-3297) or in Endo et al. (T. Endo, K. Kakimoto, B. Ochiai, D. Nagai Macromolecules, 2005, 38, 8177-8182 or in Murayama and Sanda (M. Murayama, F. Sanda, T. Endo Macromolecules 1998, 31, 919-923) or in Liu et al (J. Liu, C. Zhang, L. Liu J. Polym. Sci. 2008, 107, 3275-3279) or in Parzuchowski et al. (P. G. Parzuchowski, M. Jaroch, M. Tryznowski, G. Rokicki Macromolecules 2008, 41, 3859-3865).

According to these works, TBD and DBU and to a lesser extent DMAP offered the best compromise in terms of activity and controlled polycarbonate molecular features. Regarding the ROP of (di)lactones such as lactide, ε-caprolactone or δ-valerolactone, both TBD and DMAP exhibited enhanced activity in controlled living polymerisation as the result of their bifunctionality, enabling the simultaneous activation of both the cyclic (di)ester monomer and the alcohol group of the initiator/propagating species. Studies have been reported by Nederberg et al. (Nederberg, E. F. Connor, M. Moeller, T. Glauser, J. L. Hedrick Angew. Chem. 2001, 40 2712-2715) or Bonduelle et al. (C. Bonduelle, B. Martin-Vaca, F. P. Cossio, D. Bourissou Chem. Eur. J. 2008, 17, 5304-5312) or Thillaye du Boullay et al. (O. Thillaye du Boullay, E. Marchal, B. Martin-Vaca, F. P. Cossio, D. Bourissou J. Am. Chem. Soc. 2006, 128, 16442-16443) or Pratt et al. (R. C. Pratt, B. G. G. Lohmeijer, D. A. Long, R. M. Waymouth, J. L. Hedrick,. J. Am. Chem. Soc. 2006, 128, 4556-4557) or Lohmeijer et al (B. G. G. Lohmeijer, R. C. Pratt, F. Leibfarth, J. W. Logan, D. A. Long, A. P. Dove, F. Nederberg, J. Choi, C. Wade, R. M. Waymouth, J. L. Hedrick Macromolecules 2006, 39, 8574-8583) or Simon and Goodman (L. Simon, J. M. Goodman J. Org. Chem. 2007, 72, 9656-9662).

Regarding the most recent organocatalysts category, namely phosphazene bases such as 2-*tert*-butylimino-2-diethylamino-1,3-dimethylperhydro-1,3,2-diazaphosphorine (BEMP), *N'-tert*-butyl*-N,N,N',N',N",N"-*hexamethylphosphorimidic triamide (P1-*t*-Bu) or its dimeric analogue 1-*tert-*butyl-2,2,4,4,4-pentakis(dimethylamino)-2Λ,⁵4Λ⁵-catenadi(phosphazene) (P2-*t*-Bu), the latter has demonstrated remarkably high activity at low temperature, along with an excellent stereocontrol for the ROP of *rac*-lactide, most likely as a consequence of its high basicity and steric hindrance as disclosed for example in Zhang et al. (L. Zhang, F. Nederberg, J. M. Messman, R. C. Pratt, J. L. Hedrick, C. G. Wade J. Am. Chem. Soc. 2007, 129, 12610-12611 and L. Zhang, F. Nederberg, R. C. Pratt, R. M. Waymouth, J. L. Hedrick, C. G. Wade Macromolecules 2007, 40, 4154-4158).

### Summary of the invention.

It is an objective of the present invention to provide a method for the immortal ring-opening polymerisation of cyclic carbonate compounds using small amounts of metal-free catalyst.

It is another objective of the present invention to use, in combination with the small amounts of the metal-free catalyst, large amounts of a transfer agent to achieve "immortal" polymerisation of cyclic carbonate compounds.

It is a further objective of the present invention to control and tune the characteristics and properties of the resulting polycarbonates.

In particular, it is another objective to prepare functionalised polycarbonates selectively end-capped by groups originating from the transfer agent.

It is yet another objective of the present invention to apply the method of the immortal ring-opening polymerisation to new cyclic carbonates derived from glycerol.

It is yet a further objective of the present invention to develop a catalyst system operative on technical grade carbonate monomers, without specific preliminary purification.

In accordance with the present invention, any one of those objectives is, at least partially, realised as defined in the independent claims. Preferred embodiments are defined in the dependent claims.

### List of figures.

Figure 1 represents the number average molecular weight Mn expressed in g/mol in function of the amount of glycol expressed in equivalents with respect to the amount of BEMP.
Figure 2 represents the MALDI-TOF mass spectrum of HO-PDMTMC-OCH₂Ph.

### Description of the preferred embodiments.

Accordingly, the present invention discloses a process for polymerising five- or six- or seven-membered cyclic carbonates by immortal ring-opening polymerisation in the presence of organocatalyst precursors selected from amine, guanidine or phosphazene in the presence of alcohol acting both as co-initiator and transfer agent.

The preferred organocatalyst precursors according to the present invention are preferably selected from 4-dimethylaminopyridine (DMAP) or 1,5,7-triazobicyclo-[4,4,O]dec-5-ene (TBD) or *tert*-butylimino-1,3dimethylperhydro-1,3,2diazaphosphine (BEMP). More preferably, it is BEMP.

The alcohol can be represented by formula R'OH wherein R' is an hydrocarbyl, linear or branched, having from 1 to 20 carbon atoms. Preferably R' is a secondary alkyl residue or benzylic group, more preferably it is isopropyl (ⁱPr) or benzyl (Bn). It can also be a poly-ol such as diol, triol or higher functionality polyhydridic alcohol. Typically, it can be selected from propanediol (PPD) or trimethylolpropane, possibly derived from biomass such as glycerol (GLY) or any other sugar-based alcohol such as for example erythritol or a cyclodextrine. All alcohols can be used individually or in combination.

The reaction scheme can be represented as follows.

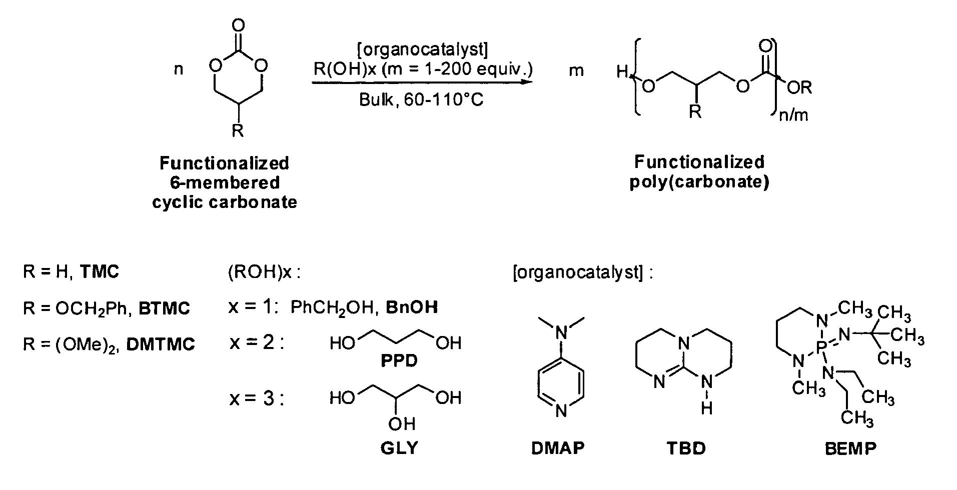

In the present invention, the catalyst system based on TBD operates via a socalled "activated monomer pathway". That means that the N-H functional group of TBD behaves as a Lewis acid onto which the carbonyl function of the monomer coordinates in the course of catalysis (via NH···O(=C) bonding). This results eventually in an increase of the electrophilicity at the carbon atom of the monomer carbonyl group, which is therefore prone to being attacked by an external nucleophile such as the alcohol co-catalyst, or any other protic source such as for example water or carboxylic acid. This external nucleophile is activated by the other component of the catalyst system, that is the basic N atom of TBD, DMAP or BEMP. Those basic N atoms interact with the H atom of the alcohol, via RO···H···N bonding. This interaction renders the alcohol more nucleophilic and more reactive toward the activated carbonyl group of the monomer.

In the current "activated monomer pathway", the alcohol plays two roies:
- as an external nucleophile for initiating the polymerisation via the ring-opening of the activated monomer; 1 equivalent of alcohol per organocatalyst is used in the process;
- as a transfer agent, by generating multiple polymer chains; all excess alcohol molecules are used in this second process, and the final molecular weight of the polymer is a function of the alcohol-to-monomer ratio.

It can be represented schematically as follows, in the case of the ROP of TMC promoted by TBD/R'OH system:

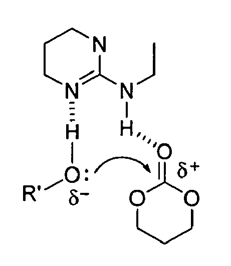

Hydroxy-end-capped polycarbonates can be thus prepared by ring-opening polymerisation (ROP) of a cyclic carbonate monomer in the presence of an organocatalyst and an alcohol that acts as an initiator and as a transfer agent. When using a mono-alcohol R'OH, all polycarbonates produced via this technique are thus capped at one end by a hydroxy group and at the other macromolecule terminus by a carbonate moiety. For instance, HO-PTMC-OR' homopolymers have been prepared in high yield by ROP of TMC, using an organocatalyst, in the presence of an alcohol (R'OH) selected typically from BnOH or *i*PrOH, wherein PTMC is the polyTMC. The homopolymers have controlled molecular weights and narrow polydispersity

Such hydroxy-end-capped HO-PTMC-OR' homopolymers can be subsequently used as macro-initiators and transfer agents, to prepare with high efficiency a variety of diblock copolymers. The reactions are performed in the presence of an organocatalyst such as for example DMAP, TBD or BEMP and they allow the ROP of cyclic polar monomers such as for example TMC, BDMC or TMC(OMe)₂.

Alternatively, a variety of diblock AB, or triblock ABA, or multiblock ... CABAC... copolymers can be prepared from the block copolymerisation of cyclic carbonate monomers A, B, C..., using respectively the corresponding monoalcohol, diol, or poly-ol, respectively.

Optionally, the alcohol can contain a functional group which will be selectively capping the terminus of each polycarbonate chain. This functional group can be used for various purposes. As non-limitating examples, one can cite:
a) vinyl end-groups which can (i) promote further copolymerisation with other olefin-type monomers; or (ii) be transformed into other functional groups such as for instance epoxide, alcohol, or 1,2-diol.
b) nitroxide or alkoxyamine end-groups which can promote controlled radical polymerisation and/or ring-opening polymerisations,
c) fluorinated pony-tails.

The system described in the present invention allows transforming very large amounts of cyclic carbonate monomer with minute amounts of organocatalyst.

Typical ratios monomer/alcohol range between 10 and 10000, preferably from 50 to 5000, more preferably from 100 to 2000.

Monomer/catalyst ratios that can be used in the present invention range from 300 to 200000, preferably from 500 to 10000.

Polymerisation can be carried out in bulk or in solution. Usual aromatic and aliphatic hydrocarbons can be used for that purpose.

Polymerisation can be carried out on technical, unpurified monomer and the polymerisation results are surprisingly not altered by the presence of impurities.

Polymerisation is conducted at a temperature ranging from 20 °C to 180 °C, preferably between 100 and 150 °C. The pressure ranges from 0.5 to 20 atm, preferably it is 1 atm.

The polycarbonates thus prepared show typically a unimodal molecular weight distribution Mw/Mn that ranges from 1.1 to 5.0, more typically from 1.3 to 1.8.

The number average molecular weight Mn can be tuned by the monomer-to-alcohol ratio and ranges from 1 000 to 1 000 000 g/mol, more typically from 10 000 to 250 000 g/mol.

This polymerisation process is operative for 5- to 7-membered cyclic carbonates. Preferably, this polymerisation process is operative for 6-membered cyclic carbonates.

The polycarbonates that can be used in the present invention are selected for example from trimethylene carbonate (TMC), 2-benzyloxy-trimethylene carbonate (BTMC), 2-hydroxy-trimethylene carbonate (TMCOH), 4-(benzyloxymethyl)-1,3-dioxolan-2-one (BDMC), 4-(hydroxymethyl)-1,3-dioxolan-2-one (DMCOH).

In particular, one can cite new cyclic carbonates such as 2-oxy-trimethylene carbonate (OTMC), and dehydrotrimethylene carbonate (DHTMC).

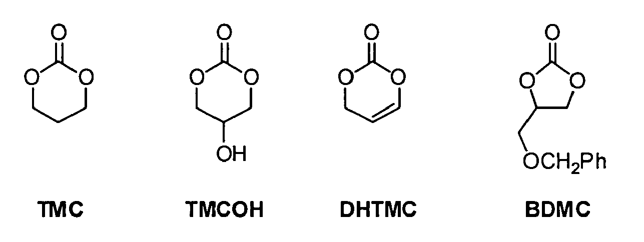

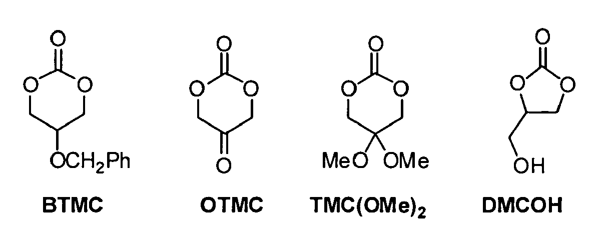

Copolymers resulting from any combinations of these monomers are also included in the present invention.

One of the main advantages of the present invention is that the cyclic carbonate monomer does not need to be purified. By unpurified is meant the technical grade taken off the shelf without any further treatment and thus potentially containing water and other protic impurities. The catalyst system of the present invention is very robust and does not have fragile covalent bonds as disclosed in the prior art Zn-based catalyst systems.

### Examples.

All manipulations were performed under inert atmosphere (argon, <3 ppm of O₂) using standard Schlenk, vacuum line and glove-box techniques. Solvents were thoroughly dried and deoxygenated by standard methods and distilled before use. CDCl₃ was dried over a mixture of 3 and 4 A molecular sieves. Trimethylene carbonate (TMC, 1,3-dioxane-2-one, technical grade, Labso Chimie Fine) was purified for comparison purposes. It was thus first dissolved in THF and stirred over CaH₂ for 2 days before being filtrated and dried. TMC was finally recrystallised from cold THF. Benzyl alcohol (BnOH = PhCH₂OH), 1,3-propanediol (PPD), glycerol (GLY), *N*,*N*-dimethylaminopyridine (DMAP), 1.5.7-triazabicyclo-[4.4.0]dec-5-ene (TBD), 2-*tert*-butylimino-2-diethylamino-1,3-dimethylperhydro-1,3,2-diazaphosphorine (BEMP) (all purchased from Aldrich) were used as received. The six-membered ring carbonate monomers 5-benzyloxy-1,3-dioxane-2-one (BTMC) and 2,2-dimethoxy-1,3-dioxane-2-one (or 2,2-dimethoxypropylene carboante, DMTMC) were synthesised as previously reported by Wang et al. (X.-L. Wang, R.-X. Zhuo, L.-J. Liu, F. He, G. Liu J. Polym. Sci, 2002, 40, 70-75) or by Wolinsky et al. (J. B. Wolinsky, W. C. Ray III, Y. L . Colson, M. W. Grinstaff Macromolecules, 2003, 36, 3557-3562) or by Zawaneh et al. (P. N. Zawaneh, A. M. Doody, A. N. Zelikin, D. Putnam Biomacromolecules, 2006, 7, 3245-3251) or by Zeliki et al. (A. N. Zelikin, P. N. Zawaneh, D. Putnam Biomacromolecules, 2006, 7, 3239-3244).

### Instrumentation and Measurements.

¹H (500, 200 MHz) and ¹³C (125, 50 MHz) NMR spectra were recorded in CDCl₃ on Bruker Avance AM 500 and DPX 200 spectrometers at 23 °C and were referenced internally using the residual ¹H and ¹³C solvent resonance relative to tetramethylsilane (δ = 0 ppm).

Number average molar mass (*M̅n*) and molar mass distribution (*M̅w*/*M̅n*) values were determined from chromatogram traces recorded by SEC in THF at 20 °C (flow rate = 1.0 mL.min⁻¹) on a Polymer Laboratories PL50 apparatus equipped with a refractive index detector and a PLgel 5A MIXED-C column. The polymer samples were dissolved in THF (2 mg mL⁻¹). All elution curves were calibrated with polystyrene standards. *M̅n*_{SEC} values of PTMCs were calculated using the average correction coefficient previously reported (*M̅n*_{SEC} = *M̅n*_{SECraw data} × z wherein z is the average of the coefficients determined from low and high molar mass PTMCs as previously reported by Palard et al. (I. Palard, M. Schappacher, B. Belloncle, A. Soum, S. M. Guillaume Chem. Eur. J. 2007, 13, 1511-1521). For low molar mass PTMCs (*M̅n* < 5 000), it is equal to 0.57 as determined using MALDI-TOF-MS analyses. For high molar masses, larger than 10000, z = 0.88 as determined using viscosimetry analyses. Z is thus equal to (0.57+0.88)/2 = 0.73. The SEC traces of the polymers all exhibited a unimodal molar mass distribution and symmetrical peak. The molar mass values of short-chain HO-PTMC-OHs were determined by ¹H NMR analysis from the relative intensity of the signals of the methylene protons of the PTMC chains (-C*H*_{2O}C(O)) at δ = 4.24 ppm to the α-hydroxymethyl (C*H*₂OH) at δ = 3.76 ppm. The number-average molar mass values thus obtained by ¹H NMR, *M̅n*_{NMR,} were in close agreement with the ones calculated.

Monomer conversions were calculated from ¹H NMR spectra of the crude polymer sample, from the integration ratio Int.PTMC/[Int.PTMC+Int.TMC], using the methylene group in the α-position of the carbonate (CH₂OC(O), δ = 4.24 ppm).

MALDI-TOF mass spectra were recorded with a AutoFlex LT high-resolution spectrometer (Bruker) equipped with a pulsed N₂ laser source (337 nm, 4 ns pulse width) and time-delayed extracted ion source. Spectra were recorded in the positive-ion mode using the reflectron mode and an accelerating voltage of 19 kV. The polymer sample was dissolved in THF (10 mg.mL⁻¹) and a solution (2:1 v:v) of α-cyano-4-hydroxycinnamic acid (10 mg.mL⁻¹) in acetonitrile/0.1%TFA was prepared. Both solutions were then mixed in a 1:1 volume ratio respectively, deposited sequentially on the sample target and then air-dried.

### Typical ROP of TMC.

### Synthesis of HO-PTMC_{PPD}-OH with the BEMP/PPD system.

1.12 g of TMC (10.9 mmol) were added to 16 µL of PPD (10 equivalents, 0.219 mmol) and 6.3 µL BEMP (21.9 µmol) placed in 0.1 mL of toluene. The mixture was then stirred at a temperature of 60 °C over the appropriate time period. The reaction was quenched with an excess of an acetic acid solution (ca. 2 mL of a 1.74 mol/L solution in toluene). The resulting mixture was concentrated under vacuum and the conversion determined by ¹H NMR analysis of the residue. This crude polymer was then dissolved in CH₂Cl₂ and purified upon precipitation in cold methanol, filtered and dried under vacuum.

The catalytic performance of organocatalysts DMAP, TBD or BEMP for the ROP of TMC was evaluated in bulk at temperatures ranging between 60 and 150 °C using benzyl alcohol (BnOH = PhCH₂OH) as initiator/chain transfer agent with monomer/catalyst/alcohol ratios varying from 500/1/5 up to 10 000/1/200 and 100 000/1/100. Representative results are displayed in Table 1.

All organocatalysts surveyed were active for the ROP of TMC exhibiting a controlled behaviour: the agreement between calculated molar mass (*M̅n*ₜₕₑₒ) and that obtained by size exclusion chromatography (SEC, *Mn*_{SEC}) analyses was very good and the molar mass distribution (*M̅w*/*M̅n*) values were very narrow. As expected for bulk polymerisations, the molar mass distribution values measured were slightly larger than those commonly obtained with solution procedures, yet within the reasonable range: all values were inferior to 1.85.

At a ratio of [TMC]/[Catalyst]/[BnOH] of 500/1/5, as typically used in previous work on ROP of TMC initiated with the zinc β-diiminate, it was observed that DMAP only partly (50%) polymerised TMC at a temperature of 60 °C within 0.5 h (example 1 in Table I). Raising the temperature to 110 °C promoted almost quantitative monomer conversion within 15 min, with only minor transesterification reactions appearing over prolonged reaction time as indicated by the slightly broadened molar mass distribution values (examples 1,3-7 in Table I).

**TABLE I.**

| **Ex** | **Catalyst** | **[TMC]/ [Catalyst]/ [BnOH]** | **Temp. (°C)** | **Reaction Time (min)** | **Conv. (%)** | M̅nₜₕₑₒ^{b} **(g.mol⁻¹)** | M̅n _{SEC}^{c} **(g.mol⁻¹)** | M̅w/M̅n^{d} | **TOF (mol_{TMC}. mol_{Cata}⁻¹.h⁻¹)** |
|---|---|---|---|---|---|---|---|---|---|
| 1 | DMAP | 500/1/5 | 60 | 30 | 50 | 5 210 | 5 050 | 1.18 | 500 |
| 2^{e} | DMAP | | 110 | 150 | 98 | 10 100 | 12 400 | 1.46 | 196 |
| 3 | DMAP | | 110 | 150 | 98 | 10 100 | 13 700 | 1.62 | 196 |
| 4 | DMAP | | 110 | 60 | 99 | 10 210 | 13 150 | 1.61 | 495 |
| 5 | DMAP | | 110 | 30 | 99 | 10 210 | 13 000 | 1.58 | 990 |
| 6 | DMAP | | 110 | 15 | 97 | 10 000 | 13 200 | 1.53 | 1 940 |
| 7 | DMAP | | 110 | 5 | 87 | 9 000 | 11 850 | 1.46 | 5 220 |
| 8 | TBD (CH₂Cl₂) | 500/1/1 | RT | 360 | 99 | 51 600 | 42 850 | 1.31 | 83 |
| 9 | TBD | 500/1/5 | 60 | 30 | 99 | 10 210 | 10 900 | 1.85 | 990 |
| 10 | TBD | | 110 | 150 | 99 | 10 210 | 11 700 | 1.44 | 198 |
| 11 | TBD | | 110 | 15 | 100 | 10 310 | 13 800 | 1.72 | 2 000 |
| 12 | TBD | | 110 | 5 | 99 | 10 210 | 12 700 | 1.52 | 5 940 |
| 13^{e} | TBD | | 110 | 5 | 100 | 10 310 | 9 950 | 1.71 | 6 000 |
| 14^{e} | BEMP | | 60 | 60 | 78 | 8 060 | 8 050 | 1.23 | 390 |
| 15 | BEMP | | 60 | 60 | 85 | 8 880 | 8 250 | 1.25 | 425 |
| 16 | BEMP | | 60 | 45 | 88 | 9 080 | 7 900 | 1.35 | 587 |
| 17 | BEMP | | 60 | 30 | 80 | 8 270 | 7 300 | 1.27 | 800 |
| 18 | BEMP | | 60 | 20 | 76 | 7 860 | 7 650 | 1.27 | 1 140 |
| 19 | BEMP | | 60 | 10 | 69 | 7 150 | 6 650 | 1.32 | 2 070 |
| 20 | BEMP | | 110 | 5 | 80 | 8 270 | 6 950 | 1.43 | 4 800 |
| 21 | Zn^{a} | | 60 | 7 | 99 | 10210 | 12400 | 1.55 | 4240 |
| 22 | Zn^{a} | | 110 | 3 | 100 | 10320 | 11 750 | 1.77 | 10000 |
| 23 | DMAP | 10 000/1/20 | 110 | 120 | 97 | 49 580 | 42 050 | 1.56 | 4 850 |
| 24 | DMAP | | 130 | 30 | 92 | 47 030 | 39 600 | 1.47 | 18 400 |
| 25 | DMAP | | 150 | 10 | 93 | 47 540 | 30 050 | 1.47 | 55 800 |
| 26 | TBD | | 110 | 120 | 98 | 50 090 | 44 850 | 1.52 | 4 900 |
| 27 | TBD | | 150 | 10 | 82 | 41 930 | 19 300 | 1.65 | 49 200 |
| 28 | BEMP | | 60 | 300 | 52 | 26 630 | 28 500 | 1.32 | 1 040 |
| 29 | BEMP | | 110 | 60 | 60 | 30 710 | 29 400 | 1.40 | 6 000 |
| 30 | BEMP | | 110 | 120 | 68 | 34 820 | 31 700 | 1.63 | 3 400 |
| 31 | BEMP | | 150 | 30 | 65 | 34 790 | 30 200 | 1.61 | 13 000 |
| 32 | Zn^{a} | | 60 | 180 | 89 | 45 500 | 43 300 | 1.90 | 2 967 |
| 33 | Zn^{a} | 5 000/1/200 | 60 | 180 | 100 | 2 660 | 1 500 | 1.23 | 1 667 |
| 34^{e} | TBD | 10 000/1/200 | 110 | 60 | 100 | 5 210 | 5 300 | 1.58 | 10 000 |
| 35^{e} | BEMP | 10 000/1/200 | 110 | 60 | 98 | 5 100 | 5 550 | 1.49 | 9 800 |
| 36^{e} | BEMP | 100 000/1/100 | 110 | 26x60 | 82 | 83 750 | 45 800 | 1.49 | 3 154 |

| | | | | | | | | | |
|---|---|---|---|---|---|---|---|---|---|
| a. Zn stands for (BDI)Zn(N(SiMe₃)₂) organometallic catalyst precursor b. Calculated from [TMC]/[BnOH] × monomer conversion × M_{TMC} + M_{BnOH}, with M_{TMC} =102 g.mol⁻¹ and M_{BnOH} = 108 g.mol⁻¹. c. Determined by SEC vs polystyrene standards and corrected by a factor of 0.73. d. Molar mass distribution Mw/Mn determined from SEC traces. e. Experiments carried out with technical-grade unpurified TMC monomer. | | | | | | | | | |

Similarly, TDB allowed faster ROP at a temperature of 110 °C than at 60 °C, readily converting the whole amount of monomer (500 equivalents versus TBD) in 5 min versus 30 min at lower temperature (examples 9-12 in Table I). In comparison to the data reported for the "classical" (i.e., non "immortal") solution ROP of TMC with a similar [TMC]/[TBD] ratio of 500 in the presence of one equiv. of BnOH (entry 8 of Table I), the guanidine is clearly much more active in the bulk "immortal" process using a 5 fold excess of BnOH with a TOF expressed in mol_{TMC}.mol_{Catalyst}⁻¹.h⁻¹ of 5940 (enty 12 in Table I) instead of the value of 83 h⁻¹ in the classical ROP.

Likewise, the BEMP initiating system allowed faster ROP of TMC at a temperature of 110 °C than at 60 °C since 400 monomer equivalents were converted within 5 min at a temperature of 110 °C, as compared to 30 min at a temperature of 60 °C (examples 15-20 in Table I)). Comparison of these three organocatalysts activity in terms of TOF values expressed in mol_{TMC}.mol_{Catalyst}⁻¹.h⁻¹ show the following results:
- within 30 min at a temperature of 60 °C (TBD (990) > BEMP (800) > DMAP (500) (examples 1,9,17 in Table I)
- within 5 min at a temperature of 110 °C (TBD (5 940) > DMAP (5 220) > BEMP (4 800) (examples 7,12,20 in Table I)

The [TMC]/[Catalyst]/[BnOH] ratio was then changed to 10 000/1/20, the reaction temperatures were of 110 and 150 °C respectively and the catalyst was selected from DMAP, TBD or BEMP. The results are displayed in examples 23 to 31 of Table I. As observed in the previous set of experiments, the reaction proceeded faster at higher temperature than at relatively lower temperature with yet, for this amount of monomer, neither loss of the control of the polymer molar mass nor broadening of the molar mass distribution. Under those experimental conditions, DMAP and TBD exhibited the highest activities with TOF values expressed in mol_{TMC}.mol_{Catalyst}⁻¹.h⁻¹ of respectively 55 800 (example 25) and 49 200 (example 27). They were more efficient than BEMP.

This was compared with the best organometallic initiating system reported to date for the "immortal" ROP of TMC, namely that based on the β-diiminate zinc derivative (BDI)Zn(N(SiMe₃)₂)/BnOH. The organocatalysts were less active than this zinc-based system at a temperature of 60 °C with TOF values expressed in mol_{TMC}.mol_{Catalyst}⁻¹.h⁻¹ of 4 240 for (BDI)Zn(N(SiMe₃)₂), 500 for DMAP, 990 for TBD and 2 070 for BEMP (examples 1, 9, 19, 21 in Table I) or at a temperature of 110 °C with TOF values expressed in mol_{TMC}.mol_{Catalyst}⁻¹.h⁻¹ of 10 000 for (BDI)Zn(N(SiMe₃)₂), 5 220 for DMAP, 5 940 for TBD and 4 800 for BEMP; (examples 7, 12, 20, 22 in table I) for a [TMC]/[Catalyst]/[BnOH] ratio of 500/1/5.

When either the initial amount of monomer or the initial amount of alcohol was raised, the BEMP and TBD were seen to resist better to potential impurities inherent to such large quantities of reagents when compared to the performance of the zinc-based system. At a [TMC]/[Catalyst]/[BnOH] ratio of 5 000/1/200, the (BDI)Zn(N(SiMe₃)₂) precursor led to a much less productive system with TOF values expressed in mol_{TMC}.mol_{Catalyst}⁻¹.h⁻¹ of 1 667 (example 33) than either that based on TBD with TOF values expressed in mol_{TMC}.mol_{Catalyst}⁻¹.h⁻¹ of up to 10 000 (example 34) or based on BEMP with TOF values expressed in mol_{TMC}.mol_{Catalyst}⁻¹.h⁻¹ of up to 9 800 (example 35) [the latter two being used with [TMC]/[Catalyst]/[BnOH] ratio of 10 000/1/200]. Besides, the molar mass of the PTMC obtained was only half the predicted value in the case of zinc-initiation at 5 000/1/200, whereas the expected value was obtained with both TBD and BEMP at 10 000/1/200 thereby underlining the lower sensitivity of the organocatalyst-based systems compared to that based on the organometallic zinc precursor..

Impurity traces possibly present in either the monomer or the alcohol were evaluated in the ROP of technical-grade unpurified TMC. All organocatalysts, namely, DMAP, TBD and BEMP, successfully initiated ROP of TMC at [TMC]/[Catalyst]/[BnOH] ratios of either 500/1/5 (examples 2 vs 3, 13 vs 12, 14 vs 15 in Table I) or of 10 000/1/200 (examples 34,35 in Table I) with no significant activity difference among the three of them nor with the similar experiment performed with purified TMC, giving polymers of controlled molar features *M̅n, M̅w*/*M̅n* and molecular structure. This represents another significant advantage of the organocatalyst-based systems compared to the organometallic zinc-based system (BDI)Zn(N(SiMe₃)₂)/BnOH which decomposes in presence of crude TMC. DMAP, TBD and BEMP / alcohol systems therefore offer a better stability towards impurities than organometallic systems.

BEMP was further investigated with high monomer concentration and alcohol content in order to upscale the polymerisation to very large amounts of monomer and of chain transfer agent and to eventually improve further the amount of growing polymer chains per organocatalyst-based initiating system. The results are displayed as examples 35 and 36 in Table I. At [TMC]/[BEMP]/[BnOH] ratio of 10 000/1/200, the ROP remained controlled as seen in example 35. On the contrary, when the amount of monomer was increased to a give a [TMC]/[BEMP]/[BnOH] ratio of 100 000/1/100, it can be seen in example 36 that the measured molar mass reached just a little more than half the expected value. The obtained polymer had, however, a molar mass of 45 800 g.mol⁻¹ starting from a technical grade TMC. Remarkably, as many as 200 polymer chains were grown in a single experiment from this phosphazene catalyst involving amounts of technical-grade monomer as high as 100 000 equiv (63 g).

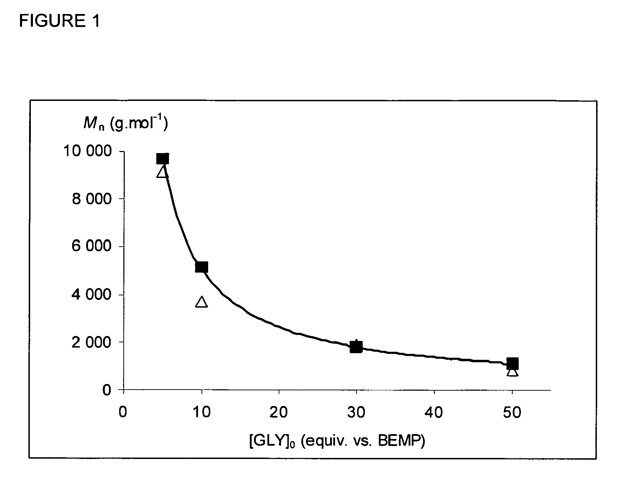

The effect of the nature of the alcohol was also investigated. 1,3-propanediol (PPD) and glycerol (GLY) were used as initiator/chain transfer agent. GLY was particularly preferred because it is easily available from natural triglycerides during the production of biodiesel and it further is a highly valuable biorenewable source to added-value commodity chemicals among which PPD. This further allowed better identification by NMR analyses of the organic branching point of the PTMC chains originating from the alcohol. The organocatalyst used was BEMP. The results are displayed in Table II. It can be seen in examples 1 and 2 that, at a [TMC]/[BEMP]/[PPD] ratio of 500/1/5, the ROP of TMC was completed within 5 min. at a temperature of 110 °C and within 10 min. at a temperature of 60 °C. These results are similar to those obtained with benzyl alcohol as seen in Table I, examples 20 and 19 respectively. The "immortal" ROP remained controlled when the amount of PPD was increased up to 50 equivalents as seen in examples 1 to 4 in Table II. Changing the chain transfer agent to glycerol gave similar results as seen in Table II, examples 5 to 8. It was further observed that, as the concentration in chain transfer agent whether PPD or GLY increased, the molar mass of the resulting PTMC decreased proportionally, as illustrated in Figure 1. The molar mass of the desired PTMC could thus be monitored on demand upon tuning the [TMC]/[BEMP]/[PPD or GLY] ratio.

**TABLE II.**

| **Ex** | **[Catalyst]** | **Diol** | **[TMC]/ [Catalyst]/ [Diol]** | **Temp. (°C)** | **Reaction Time (min)** | **Conv (%)** | M̅nₜₕₑₒ^{a} **(g.mol⁻¹)** | M̅n_{SEC}^{b} **(g.mol⁻¹)** | M̅w/M̅n^{c} |
|---|---|---|---|---|---|---|---|---|---|
| 1 | BEMP | PPD | 500/1/5 | 110 | 5 | 88 | 9 050 | 8 100 | 1.50 |
| 2 | BEMP | | 500/1/5 | 60 | 10 | 81 | 8 340 | 10 450 | 1.54 |
| 3 | BEMP | | 500/1/10 | 60 | 15 | 93 | 4 820 | 5 050 | 1.48 |
| 4 | BEMP | | 500/1/50 | 60 | 15 | 100 | 1 100 | 1 300 | 1.30 |
| 5 | BEMP | GLY | 500/1/5 | 60 | 20 | 94 | 9 680 | 9 100 | 1.57 |
| 6 | BEMP | | 500/1/10 | 60 | 15 | 100 | 5 200 | 3 700 | 1.44 |
| 7 | BEMP | | 500/1/30 | 60 | 30 | 100 | 1 790 | 1 900 | 1.43 |
| 8 | BEMP | | 500/1/50 | 60 | 20 | 100 | 1 110 | 850 | 1.54 |

| | | | | | | | | | |
|---|---|---|---|---|---|---|---|---|---|
| a. Calculated from [TMC]₀/[Diol]₀ × monomer conversion × M_{TMC} + M_{Diol}, with M_{TMC} =102 g.mol⁻¹, M_{PPD} = 76 g.mol⁻¹, M_{GLY} = 92 g.mol⁻¹ b. Determined by SEC vs polystyrene standards and corrected by a factor of 0.73. c. Molar mass distribution Mw/Mn determined from SEC traces. | | | | | | | | | |

Increasing the number of arms bearing a growing polymer chain from one with BnOH to two with PPD or three with GLY did not affect the efficiency of the transfer reaction. It was further observed that the polymerisation rate increased with increasing amounts of added alcohol.

As evidenced from NMR analyses of the polymers, the mono-, bi- or tri-(n)functional alcohol, BnOH, PPD or GLY respectively, all allowed the synthesis of mono-, bi- or tri-hydroxyfunctionalised, linear or three-arm star polymers, HO-PTMC-OBn, HO-PTMC-OH or PTMC-(OH)₃, respectively. Characterisation of the polymers enabled the identification of the typical signal corresponding to the *n*-terminal α-hydroxymethylene protons -(CH₂-OH)ₙ at δ = 3.76 ppm. Use of an *n*-functional alcohol in combination with an organic catalyst thus allowed easy access to a *n*-hydroxy telechelic polycarbonate.

Other six-membered ring carbonate monomers were also studied. They were selected from 5-benzyloxy-trimethylene carbonate (BTMC) and 2,2-dimethoxy-trimethylene carbonate (DMTMC) (Table 3). Previous work on the ring-opening (co)polymerization of BTMC revolved around enzymes or heavy metal based initiating species such as Sn(Oct)₂ and Al(OiPr)₃, with operating temperatures in the typical range of 140-150 °C with long reaction times of up to 72 h. These works were reported by Wang et al. (X.-L. Wang, R.-X. Zhuo, L.-J. Liu, F. He, G. Liu J. Polym. Sci, 2002, 40, 70-75) or Wolinsky et al. (J. B. Wolinsky, W. C. Ray III, Y. L. Colson, M. W. Grinstaff Macromolecules, 2003, 36, 3557-3562), or Zeng et al. (F. Zeng, J. Liu, C. Allen Biomacromolecules, 2004, 5, 1810-1817) or Feng et al. (J. Feng, R. Zhuo, F. He, X. Wang Macromol. Symp. 2003, 195, 137-240) or Cheng et al. (S.-X. Cheng, Z.-M. Miao, L.-S. Wang, R.-X. Zhuo Macromol Rapid Commoun. 2003, 24, 1066-1069) or Wang et al. (X.-L. Wang, R.-X. Zhuo, S.-W. Huang, L.-J. Liu, F. He Macromol. Chem. Phys. 2002, 203, 985-990) or Wang et al. (F. He, Y. Wang, J. Feng, R. Zhuo, X. Wang Polymer, 2003, 44, 3215-3219) or Wolinsky et al. (J.B. Wolinsky, W. C. Ray III, Y. L. Colson, M. W. Grinstaff Macromolecules, 2007, 40, 7065-7068).

BTMC is particularly interesting because of the possibility of deprotecting the PBTMC of its benzyl groups, thus resulting in polymers exhibiting better degradation properties due to their pendant hydroxyl groups as well as greater hydrophilicity.

Using either BnOH or PPD as protic initiator/chain transfer agent, both BTMC and DMTMC monomers underwent quantitative "immortal" ring-opening polymerization initiated with [Monomer]/[BEMP]/[Alcohol] ratio of 500 / 1 / 5 at temperatures of 60 or 90 °C, giving polycarbonates within less than 1.5 h as seen in Table III. Taking into account that the molar mass values were determined by SEC from a calibration curve established from poly(styrene) standards, the polymer molar masses measured agreed quite well with the calculated values for DMTMC, whereas the data obtained with BTMC were somewhat different. With both types of polymers, the molar mass distribution remained comparable to that observed with PTMCs prepared from bulk experiments. The results are reported in Table III.

**TABLE III.**

| **Ex** | **Monomer** | **Alcohol** | **Temp. (°C)** | **Reaction Time (min)*^{a}*** | **Conv. (%)** | M̅nₜₕₑₒ*^{a}* **(g.mol⁻¹)** | M̅n_{SEC}*^{b}* **(g.mol⁻¹)** | M̅w/M̅n*^{c}* |
|---|---|---|---|---|---|---|---|---|
| 1 | DMTMC | BnOH | 90 | 180 | 96 | 15 660 | 14 000 | 1.66 |
| 2 | DMTMC | PPD | 90 | 180 | 100 | 16 280 | 14 300 | 1.53 |
| 3 | BTMC | BnOH | 60 | 240 | 100 | 20 910 | 13 000 | 1.65 |
| 4 | BTMC | PPD | 60 | 240 | 100 | 20 880 | 15 100 | 1.62 |

All experiments carried out with a [Monomer]₀/[BEMP]₀/[Alcohol]₀ ratio of 500 / 1 / 5.
a. Calculated from [Monomer]₀/[Diol]₀ × monomer conversion × M_{Monomer} + M_{Diol}, with M_{DMTMC} = 162 g.mol⁻¹, M_{BTMC} =208 g.mol⁻¹, M_{BnOH} = 108 g.mol⁻¹. M_{PPD} = 76 g.mol⁻¹.
b. Determined by SEC vs polystyrene standards and corrected by a factor of 0.73.
c. Molar mass distribution Mw/Mn determined from SEC traces.

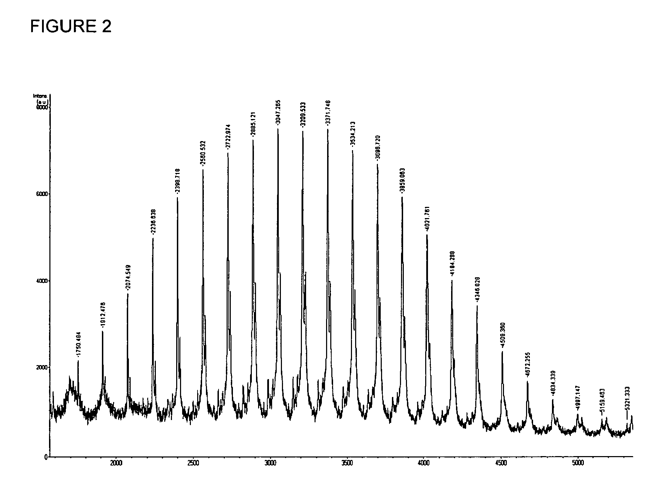

MALDI-TOF mass spectrometry analyses of a low molar mass HO-PDMTMC-OCH₂Ph sample prepared from the BEMP/BnOH catalyst system showed a main envelope corresponding to HO-PDMTMC-OCH₂Ph.Na⁺ ions, as seen in Figure 2 wherein the second minor distribution (*m*/*z* + 16) corresponds to the analogous HO-PDMTMC-OCH₂Ph.K⁺ series. In both cases, a repeat unit of 162 Da is observed that corresponds to the molar mass of DMTMC. The most intense signal detected at *m*/*z* = 3 209.5 Da corresponds to the sodium species which bears 20 DMTMC units together with benzyloxy and hydroxyl end-groups. This observation agrees well with the molar mass value measured from SEC analysis wherein *M̅n*_{SEC} = 3 130 g.mol⁻¹ thereby confirming the macromolecular structure as HOCH₂C(OMe)₂CH₂OC(O){OCH₂C(OMe)₂CH₂OC(O)}ₙOCH₂Ph. No decarboxylation of the carbonate chains was observed under the operating conditions, in agreement with NMR data.

## Claims

1. A process for polymerising five- or six- or seven-membered cyclic carbonates by immortal ring-opening polymerisation in the presence of organocatalyst precursors selected from amine, guanidine or phosphazene in the presence of alcohol acting both as co-initiator and transfer agent.

2. The process of claim 1 wherein the organocatalyst precursor is selected from 4-*N*,*N*-dimethylaminopyridine (DMAP) or 1,5,7-triazobicyclo-[4,4,0]dec-5-ene (TBD) or *tert*-butylimino-1,3dimethyl-perhydro-1,3,2diazaphosphine (BEMP).

3. The process of claim 1 or claim 2 wherein the alcohol is selected from formula R'OH wherein R' is an hydrocarbyl, linear or branched, saturated or unsaturated, having from 1 to 20 carbon atoms or is a poly-ol such as diol, triol or higher functionality polyhydridic alcohol.

4. The process of claim 3 wherein R' is a secondary alkyl residue or benzylic group, preferably PhCH₂OH (BnOH).

5. The process of claim 3 wherein the alcohol is a polyol selected from propanediol (PPD), or trimethylolpropane such as glycerol (GLY), or sugar-based alcohol such as erythritol or a cyclodextrine.

6. The process of any one of the preceding claims wherein the cyclic carbonate is selected from trimethylene carbonate (TMC), 2-benzyloxy-trimethylene carbonate (BTMC), 2,2-dimethoxy-trimethylene carbonate (DMTMC), 2-hydroxy-trimethylene carbonate (TMCOH), 4-(benzyloxymethyl)-1,3-dioxolan-2-one (BDMC), 4-(hydroxymethyl)-1,3-dioxolan-2-one (DMCOH), 2-oxy-trimethylene carbonate (OTMC), and dehydrotrimethylene carbonate (DHTMC)..

7. The process of claim 6 wherein the cyclic carbonate is selected from TMC, BTMC or DMTMC.

8. The process of any one of the preceding claims wherein the ratio monomer to alcohol ranges from 10 to 2500, preferably from 50 to 500.

9. The process of any one of the preceding claims wherein the ratio monomer to catalyst ranges from 300 to 200000, preferably from 500 to 10000.

10. Homo- or co-polymers of carbonates obtainable by the method of any one of claims 1 to 9.
